# FASCICULE DE BREVET EUROPEEN

(11) **EP 1 305 770 B1**
(45) Date de publication et mention de la délivrance du brevet: **15.03.2006**
(21) Numéro de dépôt: 01954110.1
(22) Date de dépôt: 17.07.2001
(51) Int. Cl.: G06K 19/077, B65D 19/38

(54) **ETIQUETTE ELECTRONIQUE SANS CONTACT POUR OBJET TRIDIMENSIONNEL**
TRANSPONDER FÜR DREIDIMENSIONALE OBJEKTE
CONTACT-FREE ELECTRONIC LABEL FOR THREE-DIMENSIONAL OBJECT

(30) Priorité: 28.07.2000 FR 0010002
(43) Date de publication de la demande: 02.05.2003
(73) Titulaire: Inside Contactless, 13856 Aix en Provence Cedex 3 (FR)
(72) Inventeur: SERRA, Didier, F-13240 Septeme les Vallons (FR)
(74) Mandataire: Marchand, André
(86) Numéro de dépôt international: PCT/FR2001/002311
(87) Numéro de publication internationale: WO 2002/011062

(56) Documents cités:
- EP-A- 0 783 190
- DE-A- 19 717 505
- FR-A- 2 697 801
- FR-A- 2 706 422
- US-A- 5 574 470

## Description

La présente invention concerne les étiquettes électroniques sans contact, réalisées au moyen d'un circuit intégré sans contact et d'une bobine d'antenne.

Ces dernières années, on a développé et perfectionné des circuits intégrés dits "sans contact", capables de recevoir ou de transmettre des données par couplage inductif, par l'intermédiaire d'une bobine d'antenne. Des exemples de réalisation de tels circuits intégrés sont décrits dans les demandes WO 98/02840, WO 98/02980, WO 98/05123, WO 98/06057 et WO 98/06056 au nom de la demanderesse. De tels circuits intégrés sont par ailleurs en cours de normalisation et font notamment l'objet du projet de norme ISO 14443, cité ici à titre non limitatif.

De tels circuits intégrés sans contact présentent l'avantage de pouvoir être alimentés électriquement par induction électromagnétique par l'intermédiaire de leur bobine d'antenne, sans qu'il soit nécessaire de leur adjoindre une source de tension comme une pile électrique. En contrepartie, ils offrent des distances de communication assez courtes, de l'ordre de quelques centimètres à quelques dizaines de centimètres, et sont destinés à des applications dites de proximité. Parmi ces applications, les plus courantes sont la réalisation de cartes à puce, de badges électroniques et d'étiquettes électroniques.

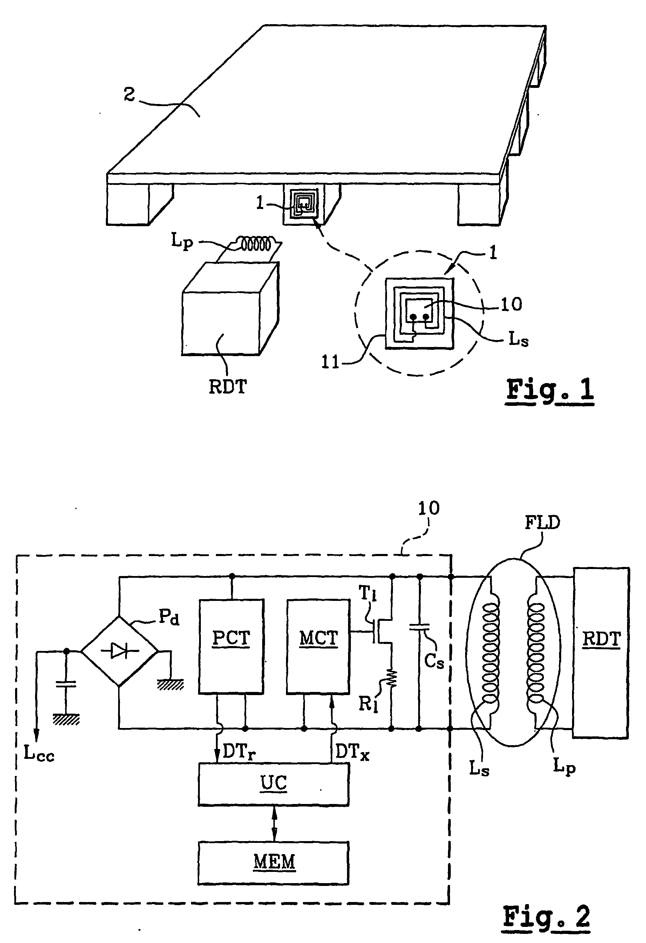

Les étiquettes électroniques sans contact trouvent elles-mêmes diverses applications comme l'identification de produits ou de marchandises, la gestion de stocks et la gestion des expéditions de marchandises. Dans de telles applications, les étiquettes électroniques sont généralement apposées sur des conteneurs, sur des cartons d'emballage ou sur des plateaux de transport de marchandises comme des palettes. A titre d'exemple, la figure 1 représente une étiquette électronique 1 apposée sur une palette 2 de transport de marchandises. L'étiquette électronique 1 comprend un circuit intégré sans contact 10 et une bobine d'antenne Ls connectée au circuit intégré 10, l'ensemble étant agencé sur un support 11, par exemple une feuille plastique autocollante fixée sur la palette 2. Lorsque le circuit intégré 10 est activé par un champ magnétique FLD émis par la bobine Lp d'un lecteur d'étiquette RDT, des données peuvent être échangées entre le lecteur RDT et le circuit intégré 10, par couplage inductif. Le circuit intégré 10 comprend généralement une mémoire programmable et effaçable électriquement accessible en lecture et en écriture, de sorte que l'étiquette électronique 1 peut être utilisée pour stocker des données permettant d'identifier la palette, son âge, sa date de mise en service, ainsi que les marchandises qu'elle porte, notamment la nature, la date de fabrication, l'origine et la destination des marchandises, etc..

Dans une telle application, il est souhaitable que l'étiquette électronique puisse être lue automatiquement au moment du transport de la palette, par exemple lorsque celle-ci est saisie par un transpalette (chariot élévateur à fourche). L'étiquette électronique 1 est ainsi agencée sur un côté de la palette 2, comme on le voit en figure 1, et un lecteur RDT est intégré dans la paroi frontale du transpalette (non représenté), en regard de la fourche porte-palettes.

L'inconvénient de cette solution est qu'en raison de la faible distance de communication offerte par la technique de couplage inductif, le côté de la palette 2 qui porte l'étiquette électronique 1 doit se trouver en regard de la paroi frontale du transpalette pour que la bobine Lp du lecteur RDT soit à proximité de la bobine Ls de l'étiquette 1.

Or, en pratique, les palettes sont susceptibles d'être saisies sur plusieurs de leurs côtés, au moins par deux de leurs côtés pour certains types de palettes et par un côté quelconque pour d'autres types de palettes. Les palettes peuvent par exemple être saisies par un côté au moment de leur dépôt dans un lieu d'entreposage, puis être saisies par leur côté opposé au moment où elles sont enlevées. Un problème similaire se pose pour la manutention d'objets tels que des cartons ou des conteneurs de marchandises, quand on souhaite effectuer une lecture automatique d'étiquettes électroniques apposées sur une face de ces objets.

Une étiquette électronique selon le préambule de la revendication 1 est connue de DE 197 17 505 A1.

Ainsi, la présente invention vise un moyen permettant de lire une étiquette électronique apposée sur une face d'un objet tridimensionnel, à partir d'une face de l'objet différente de celle où est apposée l'étiquette électronique.

Cet objectif est atteint par la prévision d'une étiquette électronique selon le revendication 1.

Selon un mode de réalisation, le circuit intégré est connecté aux deux bornes de la bobine d'antenne principale.

Selon un mode de réalisation, la bobine d'antenne principale est en boucle fermée et le circuit intégré est connecté à une bobine auxiliaire qui est couplée inductivement à l'un des enroulements de la bobine d'antenne principale en boucle fermée.

Selon un mode de réalisation, chacun des enroulements de la bobine d'antenne principale est agencé sur une face d'un objet tridimensionnel.

La présente invention concerne également un objet tridimensionnel selon le revendication 5.

Ces caractéristiques ainsi que d'autres de la présente invention seront exposées plus en détail dans la description suivante d'exemples de réalisation d'une étiquette électronique selon l'invention et d'un exemple de réalisation d'un objet tridimensionnel comprenant une telle étiquette, faite à titre non limitatif en relation avec les figures jointes parmi lesquelles :
- la figure 1 représente un plateau de transport de marchandises classique équipé d'une étiquette électronique,
- la figure 2 représente sous forme de bloc l'architecture classique d'un circuit intégré sans contact,
- la figure 3 est le schéma électrique d'un premier mode de réalisation d'une étiquette électronique selon l'invention,
- la figure 4 représente un exemple de réalisation de l'étiquette électronique de la figure 3,
- la figure 5 est le schéma électrique d'un second mode de réalisation d'une étiquette électronique selon l'invention,
- la figure 6 représente un exemple de réalisation de l'étiquette électronique de la figure 5, et
- la figure 7 représente un plateau de transport de marchandises selon l'invention.

A titre de rappel, la figure 2 représente un exemple classique d'architecture de circuit intégré sans contact 10 pour étiquette électronique. Le circuit intégré 10 comprend une capacité interne Cs formant avec la bobine d'antenne Ls un circuit d'antenne résonnant de type LC, un pont redresseur Pd à diodes, un circuit de démodulation DCT connecté aux bornes du circuit d'antenne LsCs, un circuit de modulation de charge MCT, une unité centrale UC et une mémoire MEM comprenant une zone programmable et effaçable électriquement. Le circuit de modulation de charge MCT pilote un transistor de modulation de charge Tl qui est connecté aux bornes de la bobine Ls par l'intermédiaire d'une résistance de charge R1.

Lorsque la bobine Ls se trouve dans le champ magnétique FLD émis par la bobine Lp d'un lecteur d'étiquette RDT, par exemple un champ magnétique oscillant à 13,56 MHz (norme ISO 14443), une tension alternative induite Va apparaît aux bornes de la bobine Ls. La tension Va est redressée par le pont à diodes Pd dont la sortie délivre une tension d'alimentation Vcc du circuit intégré. La transmission de données dans le sens du lecteur RDT vers le circuit intégré 10 est assurée par une modulation de l'amplitude du champ magnétique FLD émis par le lecteur. La tension induite Va est démodulée par le circuit DCT qui délivre les données reçues DTr à l'unité centrale UC. Inversement, la transmission de données dans le sens du circuit intégré 10 vers le lecteur RDT est faite par modulation de la charge de la bobine d'antenne Ls, qui se répercute sur la bobine d'antenne Lp du lecteur RDT. Cette modulation de charge est assurée le circuit modulateur MCT, qui applique au transistor Tl un signal de modulation de charge établi en fonction de données DTx fournies par l'unité centrale UC.

Afin de résoudre le problème exposé au préambule et de permettre la lecture multidimensionnelle d'une étiquette électronique agencée sur une face d'un objet tridimensionnel, l'idée de la présente invention est de faire "éclater" la bobine d'antenne Ls de l'étiquette en plusieurs enroulements distincts, agencés en série, dont le nombre est fonction de l'application visée, et d'agencer ces enroulements :
- soit sur plusieurs faces de l'objet tridimensionnel,
- soit à des emplacements différents sur une même face de l'objet tridimensionnel, notamment lorsque l'objet est de grande taille.

Une combinaison de ces deux possibilités est bien entendu envisageable.

De façon générale, deux enroulements selon l'invention se distinguent de deux enroulements d'une bobine classique par le fait qu'ils sont non coplanaires et/ou non coaxiaux. En effet, s'ils sont agencés sur une même face d'un objet, ils sont coplanaires mais non coaxiaux. S'ils sont agencés sur deux faces parallèles d'un objet, ils sont non coplanaires mais peuvent être coaxiaux. Enfin, s'ils sont agencés dans deux plans non parallèles, ils ne sont ni coplanaires ni coaxiaux.

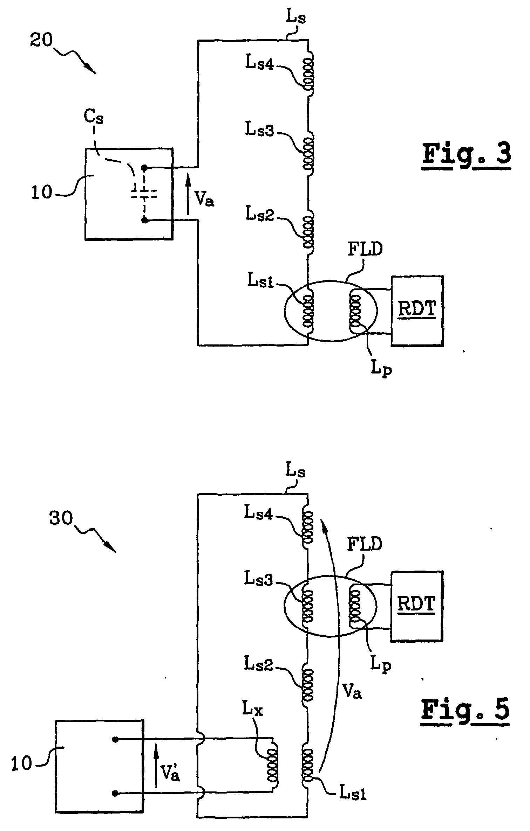

La figure 3 est le schéma électrique d'une étiquette électronique 20 selon l'invention dans laquelle la bobine Ls du circuit intégré sans contact 10 est "éclatée" en quatre enroulements Ls1, Ls2, Ls3, Ls4. Les enroulements Ls1, Ls2, Ls3, Ls4 forment une bobine d'antenne équivalente Ls qui forme elle-même, avec la capacité Cs présente dans le circuit intégré 10, un circuit d'antenne résonant.

Lorsqu'un lecteur d'étiquette électronique RDT est amené à proximité d'un enroulement, par exemple l'enroulement Ls1 en figure 3, au moins l'enroulement Ls1 est excité par le champ magnétique FLD émis par la bobine Lp du lecteur. Les autres enroulements se trouvent sensiblement en dehors du champs FLD, ou reçoivent un champ affaibli, comme cela sera expliqué plus loin. On voit apparaître aux bornes de la bobine résultante Ls une tension induite Va oscillant à la fréquence de résonance du circuit d'antenne LsCs, le fonctionnement du circuit intégré 10 étant inchangé par rapport au circuit classique de la figure 2. L'étiquette électronique peut ainsi être lue à partir de l'un quelconque des enroulements Ls1, Ls2, Ls3, Ls4, qui sont placés sur des faces différentes ou sur une même face de l'objet tridimensionnel, comme indiqué plus haut.

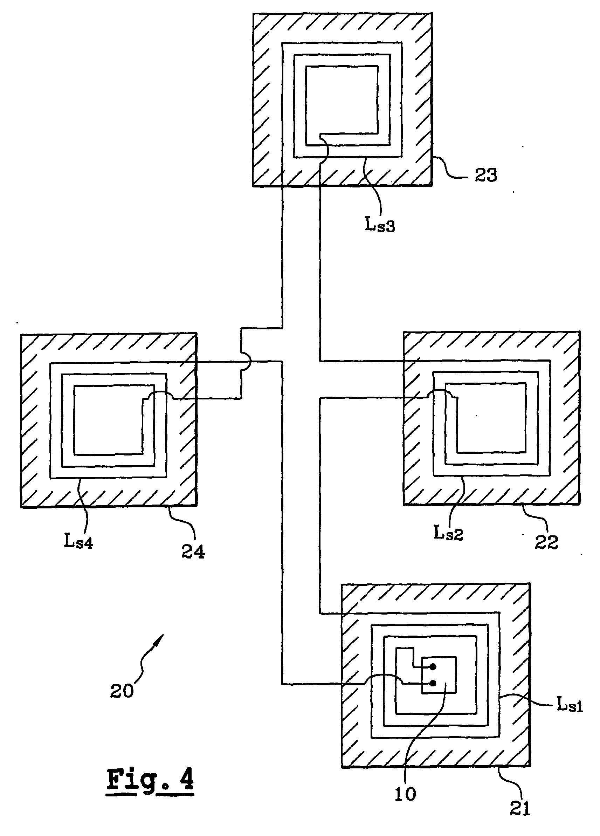

La figure 4 illustre un exemple de réalisation d'une étiquette électronique 20 conforme au schéma électrique de la figure 3. L'étiquette comprend un premier support 21 sur lequel est agencé le circuit intégré 10 et le premier enroulement Ls1. Le circuit intégré 10 présente une première borne de connexion d'antenne qui est connectée à une borne de l'enroulement Ls1. L'autre borne de l'enroulement Ls1 n'est pas connectée à la deuxième borne de connexion du circuit intégré 10 mais se prolonge au-delà du support 21 pour former, sur un support 22, le deuxième enroulement Ls2. L'autre borne du deuxième enroulement Ls2 se prolonge elle-même au-delà du support 22 pour former sur un support 23 le troisième enroulement Ls3, lequel se prolonge également au-delà du support 23 pour former, sur un support 24, le quatrième enroulement Ls4. L'autre borne du quatrième enroulement Ls4 se prolonge pour revenir au support 21 où elle est connectée à la deuxième borne de connexion d'antenne du circuit intégré 10. Les enroulements Ls1 à Ls4 comprennent un nombre de spires déterminé, au moins égal à 1, calculé selon les règles de l'art en fonction de la résistivité linéique du fil conducteur formant les enroulements, de la valeur de la capacité Cs présente dans le circuit intégré 10, et de la fréquence de résonance recherchée. Les supports 21 à 24 peuvent être des feuilles plastiques autocollante mais peuvent également être les faces de l'objet tridimensionnel sur lequel la bobine Ls est intégrée. Les enroulements Ls1 à Ls4 peuvent être formés par un fil conducteur continu et ininterrompu, comme représenté, ou par des sections de fils comportant aux deux bornes de chaque enroulement Ls1 à Ls4, une broche de connexion aux autres enroulements.

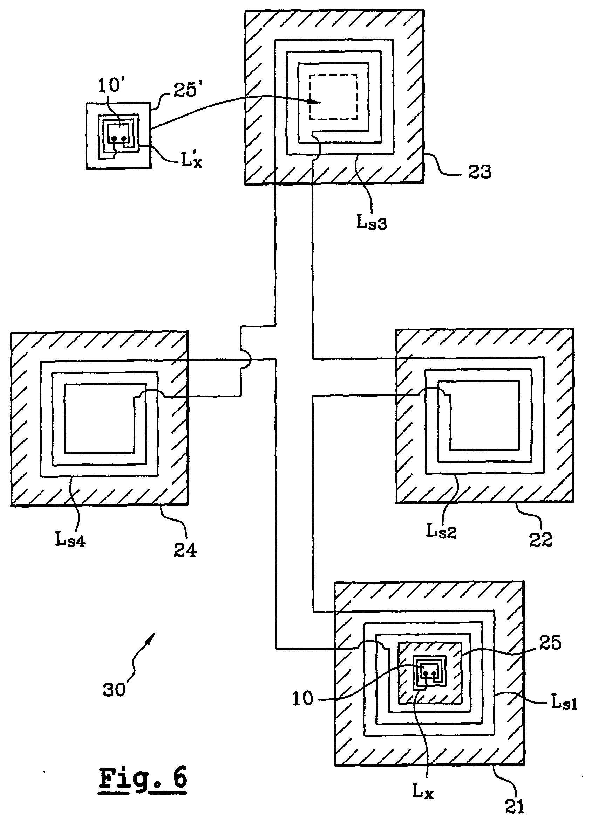

La figure 5 est le schéma électrique d'une variante de réalisation 30 de l'étiquette de la figure 3. Dans ce mode de réalisation, la structure de la bobine Ls comprend comme précédemment quatre enroulements distincts Ls1 à Ls4 mais les deux extrémités de la bobine Ls sont connectées ensemble au lieu d'être connectées aux bornes de connexion d'antenne du circuit intégré 10. La bobine Ls est donc ici agencée en boucle fermée. Le circuit intégré 10 est connecté à une bobine auxiliaire Lx qui est couplée à l'un des enroulements de la bobine Ls, par exemple l'enroulement Ls1, au moins une spire de l'enroulement auxiliaire Lx étant agencée à proximité d'au moins une spire de l'enroulement Ls1. Ainsi, lorsque la bobine Lp du lecteur RDT est approchée d'un enroulement de la bobine Ls, par exemple l'enroulement Ls3 sur la figure 5, une tension induite Va apparaît aux bornes de la bobine Ls et une tension induite Va' apparaît aux bornes de la bobine auxiliaire Lx en raison de son couplage inductif avec l'enroulement Ls1. Le fonctionnement du circuit intégré est ainsi identique à celui du circuit intégré 10 agencé dans l'étiquette classique de la figure 2.

En pratique, la bobine auxiliaire Lx peut être intégrée sur la plaquette de silicium du circuit intégré 10, selon la technique dite "coil on chip" ("bobine sur puce"). La bobine Lx peut également être intégrée avec le circuit 10 dans un micromodule silicium/polyimide du type décrit dans la demande internationale WO 00/01013 au nom de la demanderesse. Enfin, la bobine Lx peut aussi être agencée sur le support du circuit intégré 10, comme on le verra ci-après en se référant à la figure 6.

La figure 6 illustre un exemple de réalisation d'une étiquette électronique 30 conforme au schéma électrique de la figure 5. On retrouve la bobine Ls formée par les enroulements Ls1, Ls2, Ls3, Ls4 agencés respectivement sur les supports 21, 22, 23, 24 déjà décrits plus haut, la bobine Ls se distinguant du mode de réalisation de la figure 4 par le fait qu'elle est connectée en circuit fermé. Au centre de l'enroulement Ls1 est agencé un support 25 sur lequel se trouvent le circuit intégré 10 et la bobine auxiliaire Lx, qui est connectée aux bornes du circuit intégré 10 et entoure celui-ci.

Comme précédemment, les supports 21 à 24 peuvent être des supports distincts de l'objet tridimensionnel sur lequel l'étiquette 30 est agencée, ou peuvent représenter les faces de l'objet tridimensionnel. Le support 25 qui porte le circuit intégré 1.0 et la bobine auxiliaire Lx peut être un support distinct du support 21, par exemple une feuille plastique autocollante collée au centre de l'enroulement Ls1. Par ailleurs, la bobine Lx peut être intégrée sur la plaquette de silicium du circuit intégré 10 ("coil on chip") ou être incorporé avec le circuit intégré 10 sur un micromodule en silicium/polyamide, comme cela a été évoqué plus haut.

En pratique, la mise en oeuvre de la présente invention nécessite le respect de certaines règles de conception et d'agencement des enroulements, pour que les champs magnétiques dans les enroulements ne se neutralisent pas. Ces règles de conception sont à la portée de l'homme de l'art et doivent prendre en compte divers paramètres comme le taux de couplage inductif entre les enroulements et l'atténuation du champ magnétique d'un enroulement à l'autre. Le taux de couplage inductif dépend à la fois de la taille des enroulements, de la distance qui les sépare et de leurs orientations respectives. Par exemple, deux enroulements à faible distance l'un de l'autre ne présentent pas forcément un plus fort couplage inductif que deux enroulements éloignés, si les enroulements proches sont de petite taille alors que les enroulements éloignés sont de grande taille. Egalement, le taux de couplage inductif est faible si des enroulements, bien que proches, sont agencés selon des orientations différentes, par exemple sur deux faces orthogonales d'un objet.

De façon générale, le taux de couplage inductif entre les enroulements d'une étiquette selon l'invention doit être faible si les enroulements présentent des sens d'enroulement opposés. On peut par contre tolérer un fort couplage si les enroulements ont des sens d'enroulement identiques. Il faut donc s'assurer que des enroulements ayant des sens d'enroulements opposés ne sont pas fortement couplés, ou de prévoir un même sens d'enroulement si un fort couplage ne peut être évité.

En tout état de cause, la présente invention étant principalement destinée à des objets tridimensionnels ayant des dimensions assez importantes au regard du diamètre des enroulements, les enroulements d'une étiquette selon l'invention ne seront généralement pas couplés ou le seront très peu.

L'une des deux règles de conception suivantes, empiriques et expérimentales, peut ainsi être retenue :
- règle a) : deux enroulements sont éloignés l'un de l'autre d'une distance au moins égale au diamètre de l'un des enroulements s'ils sont coaxiaux, ou
- règle b) : les deux enroulements sont éloignés l'un de l'autre d'une distance au moins égale au diamètre de l'un des enroulements, quel que soit leur agencement.

En pratique, la règle b) peut être considérée comme optionnelle car il n'y a, a priori, aucune nécessité technique d'éloigner deux enroulements coplanaires. L'éloignement de deux enroulements coplanaires visé par la règle b) sera toutefois effectif dans la grande majorité des applications puisque l'objectif principal de la présente invention est de faciliter la lecture d'une étiquette électronique associée à un objet de grandes dimensions.

En outre, même si deux enroulements sont couplés et présentent des sens d'enroulements opposés (par exemple deux enroulements agencés sur deux faces parallèles d'un objet), une étiquette selon l'invention fonctionne correctement si le champ magnétique n'est pas uniforme d'un enroulement à l'autre. Or, le champ magnétique n'est généralement pas uniforme avec un dispositif de lecture classique, car un tel dispositif émet un champ magnétique de faible étendue, de l'ordre quelques centimètres à quelques dizaines de centimètres. Ainsi, un champ magnétique généré au voisinage d'un enroulement placé sur première une face d'un objet sera fortement atténué au voisinage d'un enroulement placé sur une deuxième face de l'objet, de sorte que le premier enroulement l'emportera sur le second même s'ils sont couplés et présentent des sens d'enroulement opposés.

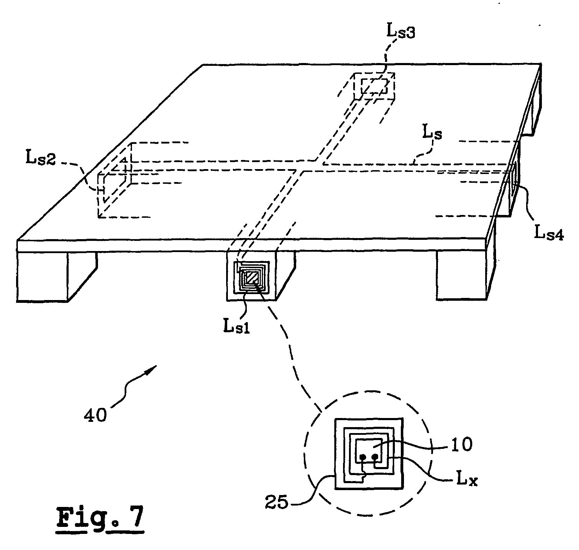

A titre d'exemple d'application, la figure 7 représente schématiquement une palette 40 selon l'invention, destinée au transport de marchandises. Selon un mode de réalisation préféré de cette palette, la palette 40 est réalisée par injection de matière plastique avec incorporation au moment de sa fabrication d'une antenne principale Ls selon l'invention, comprenant quatre enroulements Ls1, Ls2, Ls3, Ls4 agencés respectivement sur chacun des côtés de la palette, ici sur les faces externes des poutres centrales du châssis de la palette. La palette ainsi réalisée est prête à recevoir un circuit intégré 10 et sa bobine auxiliaire Lx agencés sur un support 25? Le circuit intégré sans contact peut être placé sur une face quelconque comprenant l'un des enroulements Ls1 à Ls4, au centre de l'enroulement choisi, par exemple l'enroulement Ls1 sur la figure 7. Le circuit intégré 10 agencé avec sa bobine auxiliaire Lx sur le support 25 forme une étiquette électronique à part entière capable de dialoguer avec un lecteur. La bobine Ls et ses quatre enroulements Ls1 à Ls4 forment une sorte de relais amplificateur à plusieurs entrées/sorties, permettant de communiquer avec l'étiquette à partir de l'un quelconque des enroulements Ls1 à Ls4.

Bien entendu, le circuit intégré 10 peut également être agencé dans la palette 40 au lieu d'être apposé sur cette dernière. De façon générale, la présente invention est susceptible de diverses variantes et applications, notamment en ce qui concerne la réalisation des enroulements Ls1 à Ls4 et de la bobine auxiliaire Lx, et leur intégration dans un objet tridimensionnel. Par exemple, les enroulements Ls1 à Ls4 selon l'invention peuvent être agencés sur les quatre faces d'un carton d'emballage. Ils peuvent être réalisés au moyen d'une bande de cuivre collée à la surface de l'objet tridimensionnel ou être intégrés dans la matière même de l'objet. Ils peuvent également être réalisés au moyen d'une encre conductrice.

Par ailleurs, bien que le nombre d'enroulements indépendants formant la bobine principale Ls soit égal à quatre dans la description qui précède, il est bien évident que ce nombre d'enroulements peut être supérieur ou inférieur à quatre selon l'application visée.

Enfin, comme représenté en figure 6, une étiquette électronique selon l'invention peut également comprendre un deuxième circuit intégré sans contact 10' connecté à une deuxième bobine auxiliaire Lx'. Le deuxième circuit intégré 10' et sa bobine auxiliaire Lx' peuvent être agencés au centre de l'enroulement qui reçoit le premier circuit intégré 10 et sa bobine auxiliaire Lx ou, si la place disponible n'est pas suffisante, au centre d'un autre enroulement, par exemple l'enroulement Ls3 sur la figure 6. Dans un tel mode de réalisation, le premier circuit intégré sans contact 10 peut être dédié à l'enregistrement de données relatives à la gestion du support de marchandises. (date de mise en service, fabricant, propriétaire, poids maximal en charge, date limite d'usage, lieu de recyclage, lieux d'entreposage à vide) tandis que le deuxième circuit intégré sans contact 10' peut être dédié à l'enregistrement de données concernant les marchandises contenues ou portées par le support (nature des marchandises, origine, propriétaire, destinataire, date de fabrication, numéros de série...) Les circuits intégrés 10, 10' étant destinés à être activés simultanément par un lecteur sans contact, ils incorporent un programme de gestion des communications mettant en oeuvre un protocole anticollision, par exemple celui décrit par la norme ISO 14443 ou celui décrit par la demande WO 97/42578. Ainsi, le lecteur d'étiquette, qui est également équipé du protocole anticollision, peut sélectionner en lecture et/ou en écriture l'un des deux circuits intégrés en fonction des données devant être lues et/ou écrites. Bien entendu, encore d'autres circuits intégrés sans contact peuvent être agencés dans l'un des enroulements d'une bobine d'antenne selon l'invention.

## Revendications

1. Etiquette électronique (30, 40) destinée à être apposée sur un objet tridimensionnel pour le transport d'objets ou de marchandises, et comprenant au moins un circuit intégré sans contact (10) et au moins une bobine d'antenne principale (Ls), la bobine d'antenne principale (Ls) comprenant au moins deux enroulements (Ls1-Ls4) non coplanaires et/ou non coaxiaux agencés en série et éloignés l'un de l'autre d'une distance au moins égale au diamètre de l'un des enroulements s'ils sont coaxiaux,
**caractérisé en ce que** :
- le premier enroulement (Ls1) est agencé sur un premier support individuel destiné à être monté sur une face de l'objet tridimensionnel,
- le second enroulement (Ls2-Ls4) est agencé sur un second support individuel destiné à être monté sur une face de l'objet tridimensionnel, le second support étant distinct du premier support et lié au premier support par l'intermédiaire d'un lien électrique entre les deux enroulements, de sorte que les deux supports peuvent être agencés sur deux faces différentes de l'objet tridimensionnel, et
- au moins un circuit intégré (10) agencé sur un support individuel pouvant être le premier ou le second support ou un troisième support, formant la partie électronique de l'étiquette électronique, le circuit intégré étant connecté ou couplé inductivement à la bobine d'antenne principale.

2. Etiquette électronique selon la revendication. 1, dans laquelle les premier et second supports sont des feuilles de plastique adhésives.

3. Etiquette électronique selon l'une des revendications 1 et 2, dans laquelle le circuit intégré (10) est connecté à deux bornes de la bobine d'antenne principale (Ls).

4. Etiquette électronique selon l'une des revendications 1 et 2, dans laquelle la bobine d'antenne principale (Ls) est en boucle fermée et le circuit intégré (10) est connecté à une bobine auxiliaire (Lx) qui est couplée inductivement à l'un des enroulements (Ls1) de la bobine d'antenne principale.

5. Objet tridimensionnel (40) destiné à recevoir des objets ou des marchandises et permettant le transport de tels objets ou marchandises, **caractérisé en ce qu'**il comprend :
- au moins deux enroulements (Ls1-Ls4) non coplanaires et/ou non coaxiaux connectés en série et agencés sur deux de ses faces ou au voisinage de deux de ses faces, formant ensemble une bobine d'antenne principale (Ls) d'étiquette électronique, les deux enroulements étant éloignés l'un de l'autre d'une distance au moins égale au diamètre de l'un des enroulements s'ils sont coaxiaux, et
- au moins un circuit intégré (10) agencé sur l'une de ses faces ou au voisinage de l'une de ses faces, formant la partie électronique de l'étiquette électronique, le circuit intégré étant connecté ou couplé inductivement à la bobine d'antenne principale.

6. Objet tridimensionnel selon la revendication 5, dans lequel le circuit intégré est connecté à deux bornes bobine d'antenne principale (Ls).

7. Objet tridimensionnel selon la revendication 5, dans lequel le circuit intégré est connecté à une bobine auxiliaire (Lx) qui est couplée inductivement à l'un des enroulements (Ls1) de la bobine d'antenne principale, la bobine d'antenne principale (Ls) étant connectée en boucle fermée.

8. Objet tridimensionnel selon l'une des revendications 5 à 7, dans lequel les enroulements (Lsl-Ls4) de la bobine d'antenne (Ls) principale sont incorporés dans le corps de l'objet au voisinage d'au moins l'un de ses faces.

9. Objet tridimensionnel selon l'une des revendications 5 à 7, dans lequel chaque enroulement (Ls1-Ls4) de la bobine d'antenne (Ls) principale est agencé sur un support individuel qui est fixé sur une face correspondante de l'objet.

10. Objet tridimensionnel selon la revendication 9, dans lequel chaque support individuel est une feuille plastique adhésive.

11. Objet tridimensionnel selon l'une des revendications 5 à 10, comprenant au moins un deuxième circuit intégré (10') connecté à une deuxième bobine auxiliaire (Lx) qui est couplée inductivement à l'un des enroulements (Ls3) de la bobine d'antenne principale (Ls).

12. Objet selon l'une des revendications 5 à 11, formant une palette (40) de transport de marchandises.

13. Objet selon l'une des revendications 5 à 11, formant un carton de transport de marchandises.

## Claims

1. Electronic tag (30, 40) intended to be affixed on a three-dimensional object for the transportation of objects or goods, and comprising at least one contactless integrated circuit (10) and at least one main antenna coil (Ls), the main antenna coil (Ls) comprising at least two non-coplanar and/or non-coaxial windings (Ls1-Ls4), arranged in series and being a distance apart from each other at least equal to the diameter of one of the windings if they are coaxial, **characterised in that**:
- the first winding (Ls1) is arranged on a first individual support intended to be mounted onto a face of the three-dimensional object,
- the second winding (Ls2-Ls4) is arranged on a second individual support intended to be mounted onto a face of the three-dimensional object, the second support being different from the first support and linked to the first support by means of an electrical link between the two windings, so that both supports can be arranged on two different faces of the three-dimensional object, and
- at least one integrated circuit (10) arranged on an individual support, which can possibly be the first or the second support or a third support, forming the electronic part of the electronic tag, the integrated circuit being connected or inductively coupled to the main antenna coil.

2. Electronic tag according to claim 1, wherein the first and second supports are adhesive plastic sheets.

3. Electronic tag according to one of claims 1 and 2, wherein the integrated circuit (10) is connected to two terminals of the main antenna coil (Ls).

4. Electronic tag according to one of claims 1 and 2, wherein the main antenna coil (Ls) is in closed loop and the integrated circuit (10) is connected to an auxiliary coil (Lx) which is inductively coupled to one of the windings (Ls1) of the main antenna coil.

5. Three-dimensional object (40) intended to receive objects or goods and to transport such objects or goods, **characterised in that** it comprises:
- at least two non-coplanar and/or non-coaxial windings (Ls1-Ls4), connected in series and arranged on two of its faces or in the vicinity of two of its faces, together forming a main antenna coil (Ls) of electronic tag, the two windings being a distance apart from each other which is at least equal to the diameter of one of the windings if they are coaxial, and
- at least one integrated circuit (10) arranged on one of its faces or in the vicinity of one of its faces, forming the electronic part of the electronic tag, the integrated circuit being connected or inductively coupled to the main antenna coil.

6. Three-dimensional object according to claim 5, wherein the integrated circuit is connected to two terminals of the main antenna coil (LS).

7. Three-dimensional object according to claim 5, wherein the integrated circuit is connected to an auxiliary coil (Lx) which is inductively coupled to one of the windings (Ls1) of the main antenna coil, the main antenna coil (Ls) being connected in closed loop.

8. Three-dimensional object according to one of claims 5 to 7, wherein the windings (Ls1-Ls4) of the main antenna coil (Ls) are integrated in the body of the object in the vicinity of at least one of its faces.

9. Three-dimensional object according to one of claims 5 to 7, wherein each winding (Ls1-Ls4) of the main antenna coil (Ls) is arranged on an individual support which is fixed onto a corresponding face of the object.

10. Three-dimensional object according to claim 9, wherein each individual support is an adhesive plastic sheet.

11. Three-dimensional object according to one of claims 5 to 10, comprising at least a second integrated circuit (10') connected to a second auxiliary coil (Lx) which is inductively coupled to one of the windings (Ls3) of the main antenna coil (Ls).

12. Object according to one of claims 5 to 11, forming a pallet (40) for the transportation of goods.

13. Object according to one of claims 5 to 11, forming a cardboard box for the transportation of goods.

## Patentansprüche

1. Elektronisches Etikett (30, 40), welches dazu bestimmt ist, an ein dreidimensionales Objekt für den Transport von Objekten oder Waren angebracht zu werden und mindestens einen kontaktlosen integrierten Schaltkreis (10) und mindestens eine Haupt-Antennenspule(Ls) umfasst, wobei die Haupt-Antennenspule(Ls) mindestens zwei Wicklungen (Ls1-Ls4) umfasst, welche nicht koplanar und/oder nicht koaxial, seriengeschaltet und voneinander um einen Abstand beabstandet sind, welcher mindestens gleich dem Durchmesser einer der Wicklungen ist, wenn diese koaxial sind, **dadurch gekennzeichnet, dass**
- die erste Wicklung (Ls1) auf einem ersten Einzelträger angeordnet ist, welcher dazu bestimmt ist, auf einer Fläche des dreidimensionalen Objekts montiert zu werden,
- die zweite Wicklung (Ls2-Ls4) auf einem zweiten Einzelträger angeordnet ist, welcher dazu bestimmt ist, auf einer Fläche des dreidimensionalen Objekts montiert zu werden, wobei der zweite Träger sich von dem ersten Träger unterscheidet und mit dem ersten Träger über eine elektrische Verbindung zwischen den zwei Wicklungen verbunden ist, so dass die zwei Träger auf zwei verschiedenen Flächen des dreidimensionalen Objektes angeordnet werden können, und
- mindestens ein integrierter Schaltkreis (10), welcher auf einem Einzelträger angeordnet ist, bei dem es sich um den ersten oder um den zweiten oder um einen dritten Träger handeln kann, den elektronischen Teil des elektronischen Etiketts bildet, wobei der integrierte Schaltkreis mit der Haupt-Antennenspuleinduktiv gekoppelt oder verbunden ist.

2. Elektronisches Etikett nach Anspruch 1, bei dem der erste und der zweite Träger Kunststoff-Klebefolien sind.

3. Elektronisches Etikett nach einem der Ansprüche 1 und 2, bei dem der integrierte Schaltkreis (10) mit zwei Klemmen der Haupt-Antennenspule(Ls) verbunden ist.

4. Elektronisches Etikett nach einem der Ansprüche 1 und 2, bei dem die Haupt-Antennenspule(Ls) eine geschlossene Schleife bildet und der integrierte Schaltkreis (10) mit einer Hilfsspule (Lx) verbunden ist, welche mit einer der Wicklungen (Lx1) der Haupt-Antennenspuleinduktiv gekoppelt ist.

5. Dreidimensionales Objekt (40), welches dazu bestimmt ist, Objekte oder Waren aufzunehmen, und den Transport solcher Objekte oder Waren ermöglicht, **dadurch gekennzeichnet, dass** es Folgendes umfasst:
- mindestens zwei nicht koplanare und/oder nicht koaxiale, seriengeschaltete und auf zwei von seinen Flächen oder benachbart zu zwei von seinen Flächen angeordnete Wicklungen (Ls1-Ls4), welche zusammen eine Haupt-Antennenspule(Ls) eines elektronischen Etiketts bilden, wobei die zwei Wicklungen voneinander um einen Abstand beabstandet sind, welcher mindestens gleich dem Durchmesser einer der Wicklungen ist, wenn diese koaxial sind, und
- mindestens einen auf einer von seinen Flächen oder benachbart zu einer von seinen Flächen angeordneten integrierten Schaltkreis (10), welcher den elektronischen Teil des elektronischen Etiketts bildet, wobei der integrierte Schaltkreis mit der Haupt-Antennenspuleinduktiv gekoppelt oder verbunden ist.

6. Dreidimensionales Objekt nach Anspruch 5, bei dem der integrierte Schaltkreis mit zwei Klemmen der Haupt-Antennenspule(Ls) verbunden ist.

7. Dreidimensionales Objekt nach Anspruch 5, bei dem der integrierte Schaltkreis mit einer Hilfsspule (Lx) verbunden ist, welche mit einer der Wicklungen (Ls1) der Haupt-Antennenspuleinduktiv gekoppelt ist, wobei die Haupt-Antennenspule(Ls) in einer geschlossenen Schleife verbunden ist.

8. Dreidimensionales Objekt nach einem der Ansprüche 5 bis 7, bei dem die Wicklungen (Ls1-Ls4) der Haupt-Antennenspule(Ls) in dem Körper des Objekts benachbart zu mindestens einer von dessen Flächen eingebaut ist.

9. Dreidimensionales Objekt nach einem der Ansprüche 5 bis 7, bei dem jede Wicklung (Ls1-Ls4) der Haupt-Antennenspule(Ls) auf einem Einzelträger angeordnet ist, welcher auf einer entsprechenden Fläche des Objekts befestigt ist.

10. Dreidimensionales Objekt nach Anspruch 9, bei dem jeder Einzelträger eine Kunststoff-Klebefolie ist.

11. Dreidimensionales Objekt nach einem der Ansprüche 5 bis 10, mit mindestens einem zweiten integrierten Schaltkreis (10'), welcher mit einer zweiten Hilfsspule (Lx) verbunden ist, welche mit einer der Wicklungen (Ls3) der Haupt-Antennenspule(Ls) induktiv gekoppelt ist.

12. Dreidimensionales Objekt nach einem der Ansprüche 5 bis 11, welches eine Warentransportpalette (40) bildet.

13. Dreidimensionales Objekt nach einem der Ansprüche 5 bis 11, welches einen Karton zum Warentransport bildet.
